# EUROPEAN PATENT APPLICATION

(11) **EP 4 760 550 A1**
(43) Date of publication of application: **17.06.2026**
(21) Application number: 24864481.7
(22) Date of filing: 30.08.2024
(51) Int. Cl.: G06F 18/22, A61C 17/34, A61C 17/22

(54) **TOOTH BRUSHING STRATEGY DETERMINATION METHOD AND APPARATUS, ELECTRONIC DEVICE, AND STORAGE MEDIUM**

(30) Priority: 13.09.2023 CN 202311185595
(71) Applicant: Guangzhou Stars Pulse Co., Ltd., Guangzhou, Guangdong 510620 (CN)
(72) Inventor: XU, Haochang, Guangzhou, Guangdong 510620 (CN); TIAN, Haozhe, Guangzhou, Guangdong 510620 (CN); HU, Yantao, Guangzhou, Guangdong 510620 (CN); LIN, Wenqiang, Guangzhou, Guangdong 510620 (CN)
(74) Representative: Metida
(86) International application number: PCT/CN2024/116016
(87) International publication number: WO 2025/055759

(57) **Abstract**

A method for determining a brushing strategy, an apparatus thereof, an electronic device, and a computer-readable storage medium are provided. The method includes acquiring a historical brushing record at least including first historical brushing data corresponding to a first historical brushing cycle and second historical brushing data corresponding to a second historical brushing cycle; comparing the first historical brushing data with the second historical brushing data to obtain at least one first comparison result; when the at least one first comparison result is within at least one first preset range, determining that a required brushing strategy of a toothbrush is a first brushing strategy; and when the at least one first comparison result is not within the first preset range, determining that the required brushing strategy of the toothbrush is a second brushing strategy. The method improves accuracy of the required brushing strategy and enhances intelligence of the toothbrush.

## Description

### TECHNICAL FIELD

The present disclosure relates to a field of display technology, and in particular to a method for determining a brushing strategy, an apparatus thereof, an electronic device, and a computer-readable storage medium.

### BACKGROUND

To adapt to brushing requirements of different users, smart toothbrushes on the market are generally configured with at least two different brushing strategies for users to select and use. Currently, which brushing strategy a smart toothbrush operates with is commonly selected by a user according to their own requirements. Since the user may be unable to accurately obtain their own brushing conditions, a situation may occur where the brushing strategy selected by the user does not match a desired brushing strategy actually required by the user, resulting in poor brushing effect of the smart toothbrush. How to more intelligently and accurately determine the brushing strategy for the smart toothbrush has become a technical problem that urgently needs to be solved.

### SUMMARY

The present disclosure provides a method for determining a brushing strategy, an apparatus thereof, an electronic device, and a computer-readable storage medium, which are able to accurately determine a required brushing strategy for the user, improve accuracy of a determined brushing strategy, and enhance intelligence of the toothbrush.

In a first aspect, the present disclosure provides the method for determining the brushing strategy. The method includes steps:
acquiring a historical brushing record, wherein the historical brushing record at least includes first historical brushing data corresponding to a first historical brushing cycle and second historical brushing data corresponding to a second historical brushing cycle;
comparing the first historical brushing data with the second historical brushing data to obtain at least one first comparison result;
when the at least one first comparison result is within at least one first preset range, determining that a required brushing strategy of a toothbrush is a first brushing strategy; and
when the at least one first comparison result is not within the first preset range, determining that the required brushing strategy of the toothbrush is a second brushing strategy.

In a second aspect, the present disclosure provides the apparatus for determining the brushing strategy. The apparatus includes a record acquisition module, a comparison module, and a strategy determination module.

The record acquisition module is configured to acquire a historical brushing record. The historical brushing record at least includes first historical brushing data corresponding to a first historical brushing cycle and second historical brushing data corresponding to a second historical brushing cycle. The comparison module is configured to compare the first historical brushing data with the second historical brushing data to obtain at least one first comparison result. When the at least one first comparison result is within at least one first preset range, the strategy determination module is configured to determine that a required brushing strategy of a toothbrush is a first brushing strategy. When the at least one first comparison result is not within the at least one first preset range, the strategy determination module is configured to determine that the required brushing strategy of the toothbrush is a second brushing strategy.

In a third aspect, the present disclosure includes the electronic device. The electronic device includes a memory and a processor. A computer program is stored in the memory. When the computer program is executed by the processor, the processor implements the method described above.

In a fourth aspect, the present disclosure provides a computer-readable storage medium. The computer-readable storage medium includes a computer program stored thereon. When the computer program is executed by a processor, the method described above.

The present disclosure provides the method for determining the brushing strategy. The method includes steps of acquiring the historical brushing record; comparing the first historical brushing data with the second historical brushing data to obtain the at least one first comparison result; when the at least one first comparison result is within the at least one first preset range, determining that the required brushing strategy of the toothbrush is the first brushing strategy; and when the at least one first comparison result is not within the at least one first preset range, determining that the required brushing strategy of the toothbrush is the second brushing strategy. The historical brushing record at least includes first historical brushing data corresponding to a first historical brushing cycle and second historical brushing data corresponding to a second historical brushing cycle.

### BRIEF DESCRIPTION OF DRAWINGS

In order to clearly describe technical solutions in the embodiments of the present disclosure, the following will briefly introduce the drawings that need to be used in the description of the embodiments or the prior art. Apparently, the drawings in the following description are merely some of the embodiments of the present disclosure, and those skilled in the art are able to obtain other drawings according to the drawings without contributing any inventive labor.
FIG. 1 is an application scenario diagram of a method for determining a brushing strategy according to one embodiment of the present disclosure.
FIG. 2 is a flowchart of the method according to one embodiment of the present disclosure.
FIG. 3 is another flowchart of the method according to one embodiment of the present disclosure.
FIG. 4 is a flowchart of determining that the brushing strategy of the toothbrush is a second brushing strategy according to one embodiment of the present disclosure.
FIG. 5 is a schematic diagram of an interface for outputting strategy prompt information according to one embodiment of the present disclosure.
FIG. 6 is a flowchart of generating a brushing report according to the at least one first comparison result, and outputting the brushing report, according to one embodiment of the present disclosure.
FIG. 7A is a schematic diagram of a report interface corresponding to a brushing duration according to one embodiment of the present disclosure.
FIG. 7B is a schematic diagram of a report interface corresponding to brushing duration according to another embodiment of the present disclosure.
FIG. 7C is a schematic diagram of the brushing report according to one embodiment of the present disclosure.
FIG. 7D is a schematic diagram of a brushing report according to another embodiment of the present disclosure.
FIG. 8 is a flowchart of the method according to another embodiment of the present disclosure.
FIG. 9 is a schematic diagram of displaying a brushing task progress according to one embodiment of the present disclosure.
FIG. 10 is a block diagram of an apparatus for determining the brushing strategy according to one embodiment of the present disclosure.
FIG. 11 is a block diagram of an electronic device according to one embodiment of the present disclosure.

### DETAILED DESCRIPTION

Technical solutions in the embodiments of the present disclosure will be clearly and completely described below in conjunction with the accompanying drawings in the embodiments of the present disclosure. Obviously, the described embodiments are only a part of the embodiments of the present disclosure, rather than all of the embodiments. Based on the embodiments of the present disclosure, all other embodiments obtained by those of ordinary skill in the art without creative work shall fall within the protection scope of the present disclosure.

It should be noted that terms "have", "include", and any variations thereof are intended to cover non-exclusive inclusion, e.g., includes a series of steps or units, processes, methods, systems, products, or devices, which are not limited to the listed steps or units, but may optionally further include steps or units not listed, or optionally further includes steps or units inherent to the processes, methods, products, or devices.

It is understood that terms such as "first", "second", etc. may be used herein to describe various elements, but these elements are not limited by these terms. These terms are only used to distinguish a first element from another. For example, a first historical brushing cycle may be referred to as a second historical brushing cycle without departing from the scope of the present disclosure. Similarly, the second historical brushing cycle may be referred to as the first historical brushing cycle. The first historical brushing cycle and the second historical brushing cycle are both historical brushing cycles, but they are not the same historical brushing cycle. The term "a plurality of" used in the present disclosure refers to two or more. The term "and/or" used in the present disclosure refers to one solution therein, or any combination of various solutions.

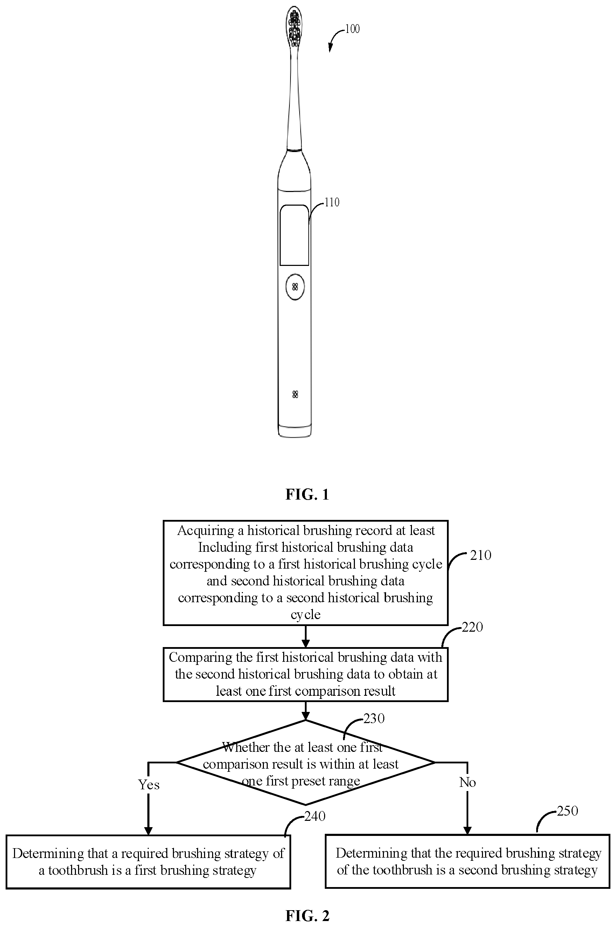

FIG. 1 is an application scenario diagram of a method for determining a brushing strategy according to one embodiment of the present disclosure. As shown in FIG. 1, the method for determining the brushing strategy of the embodiments of the present disclosure may be applied to a toothbrush 100. The toothbrush 100 may be an electric toothbrush or a non-electric toothbrush. One or more sensors may be disposed on the toothbrush 100, and each of the sensors is configured to acquire brushing data during a brushing process. For example, an image sensor is disposed on the toothbrush 100, and the image sensor is configured to acquire images during the brushing process, so that a tooth area where the toothbrush 100 is located is identified by analyzing the images during the brushing process. Further, a pressure sensor is disposed on the toothbrush 100, and the pressure sensor is configured to acquire a pressure of a brush head during the brushing process, so that whether brushing force is too large (i.e., overpressure) is determined by analyzing the pressure of the brush head, and whether brushing actually starts is determined, but it is not limited thereto.

The toothbrush 100 further includes a processor, and the processor is configured to control brushing strategies of the toothbrush 100 and control each of the sensors on the toothbrush 100 to perform data acquisition.

Furthermore, the toothbrush 100 is the electric toothbrush, and a motor is disposed in a handle of the toothbrush 100. The processor is configured to control the motor to vibrate at a preset frequency, thereby driving the brush head to vibrate to implement an electric brushing mode.

In the embodiments of the present disclosure, the toothbrush 100 is able to acquire a historical brushing record. The historical brushing record at least includes first historical brushing data corresponding to a first historical brushing cycle and second historical brushing data corresponding to a second historical brushing cycle. The toothbrush 100 is able to compare the first historical brushing data with the second historical brushing data to obtain at least one first comparison result. When the at least one first comparison result is not within at least one first preset range, it is determined that a required brushing strategy of the toothbrush is a first brushing strategy. When the at least one first comparison result is not within the at least one first preset range, it is determined that the required brushing strategy of the toothbrush is a second brushing strategy.

In some embodiments, the toothbrush 100 further includes a display device 110. The toothbrush 100 is able to generate a brushing report according to the at least one first comparison result and is able to display the brushing report through the display device 110, so that a user is able to accurately obtain their own brushing data by viewing the brushing report displayed on the display device 110.

As shown in FIG. 2, in one embodiment, the present disclosure provides a method for determining a brushing strategy, which is applied to an electronic device. The electronic device is the toothbrush 100 mentioned above, a terminal device communicated with the toothbrush 100, or a server communicated with the toothbrush 100, etc. The terminal device includes, but is not limited to, a mobile phone, a tablet computer, a wearable device (such as a smartphone), etc. A communicative connection between the toothbrush 100 and the terminal device includes, but is not limited to, a Bluetooth communication connection, a Wi-Fi communication connection, etc. The method for determining the brushing strategy includes steps 210-250.

The step 210 includes acquiring a historical brushing record.

The historical brushing record at least includes first historical brushing data corresponding to a first historical brushing cycle and second historical brushing data corresponding to a second historical brushing cycle.

In each brushing process of the toothbrush, the toothbrush is able to acquire brushing data during the brushing process through one or more sensors and save the brushing data. Further, the brushing data is stored in association with at least one of a brushing start time and a brushing end time of the brushing process. The brushing start time refers to a time point when the user starts brushing. The brushing start time is a time when the toothbrush receives a toothbrush startup instruction, or a time when the toothbrush executes the brushing startup instruction. Alternatively, the brushing start time may be a time when the toothbrush detects that the brush head enters an oral cavity, etc. The brushing end time refers to a time point when the user ends brushing. The brushing end time is a time when the toothbrush receives a toothbrush shutdown instruction/toothbrush standby instruction. Alternatively, the brushing end time is a time when the brush head leaves the oral cavity of the user in a case where the toothbrush detects that the brush head leaves the oral cavity of the user and does not re-enter the oral cavity within a preset duration, etc., which is not limited herein.

The electronic device is able to acquire the historical brushing record, and the historical brushing record at least includes the first historical brushing data corresponding to the first historical brushing cycle and the second historical brushing data corresponding to the second historical brushing cycle. Further, the second historical brushing cycle is a previous brushing cycle of the first historical brushing cycle, and the first historical brushing cycle is a historical brushing cycle closest to a current time. For instance, the first historical brushing cycle is a previous brushing cycle of a current brushing cycle.

Brushing cycles may be preset, with each brushing cycle corresponding to a same time period. For instance, each brushing cycle is set to 7 days or 4 days, but it is not limited thereto. When one brushing cycle ends, a next brushing cycle starts. The electronic device is able to acquire the historical brushing record each time a new brushing cycle starts; or, the electronic device is able to acquire the historical brushing record when the toothbrush is started for the first time after the new brushing cycle starts (i.e., preparing for brushing), so as to determine the required brushing strategy corresponding to the current brushing cycle of the toothbrush according to the historical brushing record.

Historical brushing data corresponding to one historical brushing cycle includes at least one brushing data corresponding to each brushing process of the toothbrush in the historical brushing cycle, statistical brushing data corresponding to the historical brushing cycle (such as data obtained by accumulating, averaging, etc., the brushing data corresponding to each brushing process included in the entire historical brushing cycle), and statistical brushing data respectively corresponding to sub-cycles included in the historical brushing cycle (such as data obtained by accumulating, averaging, etc., the brushing data corresponding to each brushing process within each of the sub-cycles in the historical brushing cycle).

Taking the brushing cycle of 7 days as an example, the historical brushing data corresponding to one historical brushing cycle includes at least one of the brushing data corresponding to each brushing process within 7 days, the statistical brushing data obtained by accumulating the brushing data corresponding to each brushing process within 7 days, and/the statistical brushing data of each day obtained by accumulating the brushing data corresponding to each brushing process of each day, etc.

The historical brushing data includes one or more types of brushing data. Optionally, the one or more types of brushing data include at least one of a brushing duration, a brushing cleaning rate, a brushing tooth area coverage, a brushing pressure, a dental plaque cleaning rate, and a dental plaque residual amount, etc. The brushing duration refers to an effective brushing time length in each brushing process. The brushing cleaning rate refers to a cleaning degree of brushing. The brushing tooth area coverage refers to a proportion of tooth areas brushed during each brushing process to all tooth areas. The brushing pressure refers to pressure of the brush head during each brushing process. The dental plaque cleaning rate refers to a proportion of dental plaque removed. The dental plaque residual amount refers to a quantity of dental plaque remaining when the brushing ends.

The step 220 includes comparing the first historical brushing data with the second historical brushing data to obtain at least one first comparison result.

The electronic device is able to compare the first historical brushing data of the first historical brushing cycle with the second historical brushing data of the second historical brushing cycle to obtain the at least one first comparison result. The at least one first comparison result is configured to reflect a change in brushing habits or brushing effects of the user. The at least one first comparison result includes a magnitude relationship between the first historical brushing data and the second historical brushing data, and a data difference between the first historical brushing data and the second historical brushing data.

As one embodiment, a first brushing score corresponding to the first historical brushing cycle is calculated according to the first historical brushing data, and a second brushing score corresponding to the second historical brushing cycle is calculated according to the second historical brushing data. The first brushing score is configured to represent the brushing habits or the brushing effects of the user within the first historical brushing cycle, and the second brushing score is configured to represent the brushing habits or the brushing effects of the user within the second historical brushing cycle. The first brushing score is compared with the second brushing score to obtain a first comparison result (i.e., in this case, the at least one first comparison result only includes one first comparison result). The first comparison result is a difference value obtained by subtracting the second brushing score from the first brushing score. The difference value reflects change in the brushing habits or the brushing effects of the user. For instance, when the difference value is less than 0, that is, the first brushing score is less than the second brushing score, it indicates that the brushing habits or the brushing effects of the user become worse. When the difference value is greater than 0, that is, the first brushing score is greater than the second brushing score, it indicates that the brushing habits or the brushing effects of the user become better. The larger an absolute value of the difference value is, the larger a change degree is. By respectively calculating and comparing the first brushing score corresponding to the first historical brushing cycle and the second brushing score corresponding to the second historical brushing cycle, the first comparison result is more intuitive, helping to more accurately determine the required brushing strategy for the user.

As another embodiment, the historical brushing data includes one or more types of brushing data. Brushing data of the same type in the first historical brushing data and the second historical brushing data are respectively compared to obtain one or more first comparison results respectively corresponding to the one or more types of brushing data (i.e., in this case, the at least one first comparison result includes one or more first comparison results). For example, the first historical brushing data includes a first average dental plaque residual amount, a first average brushing duration, and a first average brushing tooth area coverage of the first historical brushing cycle. The second historical brushing data includes a second average dental plaque residual amount, a second average brushing duration, and a second average brushing tooth area coverage of the second historical brushing cycle. Then, the first average dental plaque residual amount is compared with the second average dental plaque residual amount, the first average brushing duration is compared with the second average brushing duration, and the first average brushing tooth area coverage is compared with the second average brushing tooth area coverage, so as to obtain first comparison results of three different types of brushing data. By respectively comparing three types of brushing data, compared brushing data is rich, and the change in the brushing habits or the brushing effects of the user is accurately reflected, thus helping to more accurately determine the required brushing strategy for the user.

Optionally, the historical brushing data includes the one or more types of brushing data, and only one type of brushing data is selected therefrom for comparison. For example, the first historical brushing data includes the first average dental plaque residual amount, the first average brushing duration, and the first average brushing tooth area coverage of the first historical brushing cycle, and the second historical brushing data includes the second average dental plaque residual amount, the second average brushing duration, and the second average brushing tooth area coverage of the second historical brushing cycle. Only the first average dental plaque residual amount is compared with the second average dental plaque residual amount to obtain one first comparison result. That is, the at least one first comparison result only includes a comparison result of the first average dental plaque residual amount and the second average dental plaque residual amount. By selecting only one type of brushing data for comparison, a comparison process is simplified, comparison efficiency is improved, and calculation costs and power consumption are reduced.

The step 230 includes determining whether the at least one first comparison result is within at least one first preset range; if yes, executing step 240; and if not, executing step 250.

The step 240 includes determining that a required brushing strategy of the toothbrush is a first brushing strategy.

The step 250 includes determining that the required brushing strategy of the toothbrush is a second brushing strategy.

A cleaning capability of the second brushing strategy is greater than a cleaning capability of the first brushing strategy.

Optionally, the cleaning capability of the second brushing strategy and the cleaning capability of the first brushing strategy are verified according to multiple experiments. For instance, the toothbrush is controlled to perform brushing processes (the brushing duration of each brushing process is the same) under the second brushing strategy and the first brushing strategy, respectively, and brushing indicators such as the brushing cleaning rate, the dental plaque cleaning rate, and the dental plaque residual amount of each brushing process are statistically collected, so as to verify the cleaning capabilities of the two brushing strategies. It is verified through multiple experiments that the brushing cleaning rate of the second brushing strategy is greater than the brushing cleaning rate of the first brushing strategy, the dental plaque cleaning rate of the second brushing strategy is greater than the dental plaque cleaning rate of the first brushing strategy, and the dental plaque residual amount of the second brushing strategy is less than the dental plaque residual amount of the first brushing strategy.

The second brushing strategy and the first brushing strategy correspond to different toothbrush operating parameters, and the toothbrush operating parameters include one or more of a motor frequency, a motor duty cycle, a motor operating duration, a frequency change time interval of a motor, etc. Optionally, the cleaning capability of the second brushing strategy and the cleaning capability of the first brushing strategy are determined according to the toothbrush operating parameters respectively corresponding to the second brushing strategy and the first brushing strategy. For instance, the motor frequency corresponding to the second brushing strategy is greater than the motor frequency corresponding to the first brushing strategy, the motor duty cycle corresponding to the second brushing strategy is greater than the motor duty cycle corresponding to the first brushing strategy, the motor operating duration corresponding to the second brushing strategy is not less than the motor operating duration corresponding to the first brushing strategy, and the frequency change time interval corresponding to the second brushing strategy is less than the frequency change time interval corresponding to the first brushing strategy, thereby improving the cleaning capability of the second brushing strategy.

After an electronic device obtains the at least one first comparison result, the electronic device determines whether the at least one first comparison result is within at least one first preset range. When the at least one first comparison result is within the at least one first preset range, it indicates that changes in the brushing habits or the brushing effects of the user are not significant after obtaining the at least one first comparison result, and the required brushing strategy of the toothbrush is determined to be the first brushing strategy. Although the cleaning capability of the first brushing strategy is less than that of the second brushing strategy, brushing comfort of the first brushing strategy is greater than that of the second brushing strategy. In this way, a more comfortable brushing strategy is selected and the brushing comfort is improved when the changes in the brushing habits or the brushing effects of the user are not significant.

When the at least one first comparison result is not within the at least one first preset range, it indicates that the changes in the brushing habits or the brushing effects of the user are significant. Further, it indicates that the brushing habits or the brushing effects of the user become worse, and the required brushing strategy of the toothbrush is determined to be the second brushing strategy. The cleaning capability of the second brushing strategy is greater than the cleaning capability of the first brushing strategy, so that the second brushing strategy with a stronger cleaning capability is selected to improve the brushing habits of the user and enhance the brushing effects when the brushing habits or the brushing effects of the user become worse.

It should be noted that the at least one first preset range is configured according to actual requirements, and a specific value of the at least one first preset range is not limited thereto.

In some embodiments, after the electronic device determines the required brushing strategy of the toothbrush, the electronic device determines whether the required brushing strategy is consistent with a current brushing strategy. When the required brushing strategy is inconsistent with the current brushing strategy, a strategy switching instruction is generated to control the toothbrush to switch to the required brushing strategy according to the strategy switching instruction. Optionally, when the electronic device is the terminal device or the server in communication with the toothbrush, after the strategy switching instruction is generated, the strategy switching instruction is sent to the toothbrush. The strategy switching instruction carries strategy information of the required brushing strategy, such as a strategy name, a strategy ID (Identity document), and the like. The toothbrush switches to the required brushing strategy according to the strategy switching instruction, so as to accurately control the toothbrush to switch to the required brushing strategy.

In the embodiments of the present disclosure, whether the brushing habits or the brushing effects of the user become worse is accurately analyzed by comparing the historical brushing data of the two historical brushing cycles (i.e., the first historical brushing cycle and the second historical brushing cycle). When the brushing habits or the brushing effects of the user become worse, the required brushing strategy of the toothbrush is determined to be the second brushing strategy with the stronger cleaning capability, thereby improving the brushing habits of the user, enhancing the brushing effects, accurately determining the required brushing strategy of the user, improving accuracy of the determined brushing strategy, and improving the intelligence of the toothbrush.

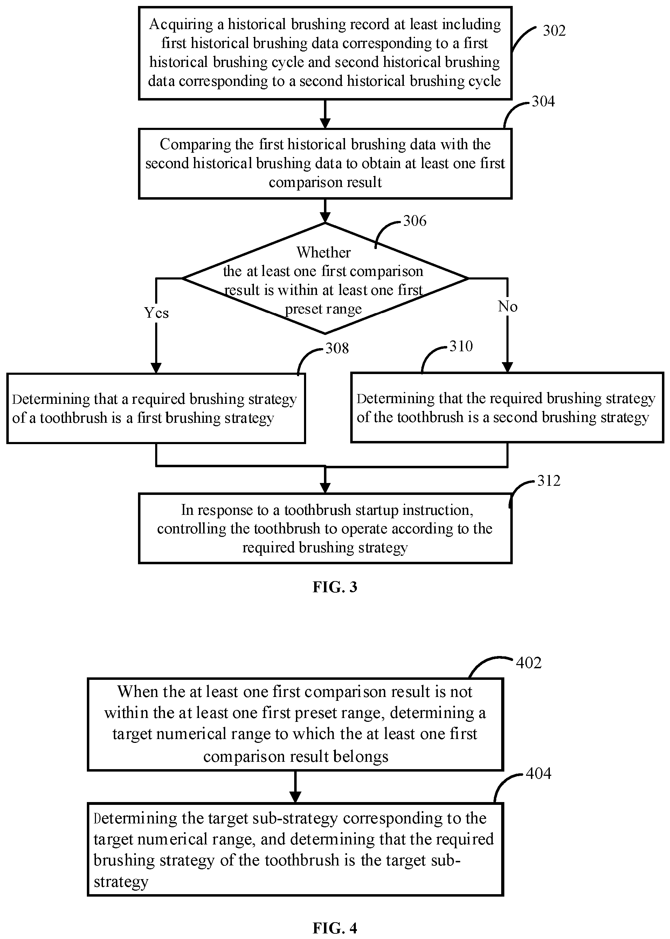

As shown in FIG. 3, in another embodiment, a method for determining a brushing strategy is provided, which is applied to an electronic device. The method includes steps 302-312.

The step 302 includes acquiring a historical brushing record. The historical brushing record at least includes first historical brushing data corresponding to a first historical brushing cycle and second historical brushing data corresponding to a second historical brushing cycle.

Relevant description of the step 210 in the above embodiments is referred to for description of the step 302, and details are not repeated herein.

The step 304 includes comparing the first historical brushing data with the second historical brushing data to obtain at least one first comparison result.

The step 306 includes determining whether the at least one first comparison result is within at least one first preset range; if yes, executing the step 308; and if not, executing the step 310.

The step 308 includes determining that a required brushing strategy of a toothbrush is a first brushing strategy.

The step 310 includes determining that the required brushing strategy of the toothbrush is a second brushing strategy.

In some embodiments, the historical brushing data includes one or more types of brushing data, and each type of brushing data has a corresponding first preset range (i.e., the at least one first preset range includes first preset ranges). The first preset ranges corresponding to different types of brushing data are the same or different. In a case where brushing data belonging to a same type in the first historical brushing data and the second historical brushing data are compared to obtain one or more first comparison results respectively corresponding to the one or more types of brushing data. Whether the first comparison results corresponding to all types of brushing data are within the first preset ranges of all types of brushing data is respectively determined. When the first comparison results corresponding to all types of brushing data are within the first preset ranges of all types of brushing data, it is determined that the required brushing strategy of the toothbrush is the first brushing strategy. When there is any one of the first comparison results corresponding to a first type of brushing data that is not within a first preset range corresponding to the first type of brushing data, it is determined that the required brushing strategy of the toothbrush is the second brushing strategy. The first type of brushing data is any type of brushing data.

For example, a first preset range corresponding to the average dental plaque residual amount is not greater than 5%, a first preset range corresponding to the average brushing duration is not less than 20s (seconds), and a first preset range corresponding to the average brushing dental area coverage is not less than -10%, etc. Assuming that the first comparison results of a 6% increase in the average dental plaque residual amount, a 10-second decrease in the average brushing duration, and a 5% decrease in the average brushing dental area coverage are obtained by comparing the first historical brushing data with the second historical brushing data; among the first comparison results, the 6% increase in the average dental plaque residual amount is not within the first preset range (not greater than 5%) corresponding to the average dental plaque residual amount, and therefore it is determined that the required brushing strategy of the toothbrush is the second brushing strategy. By setting different first preset ranges for different types of brushing data, the brushing habits or the brushing effects of the user are analyzed from different dimensions, and accuracy of the required brushing strategy is improved.

In some embodiments, the first historical brushing cycle includes first sub-cycles, the second historical brushing cycle includes second sub-cycles, and the first sub-cycles are one-to-one corresponding to the second sub-cycles. Sub-cycle durations of each of the first sub-cycles and each of the second sub-cycles are the same. For instance, a sub-cycle duration of one of sub-cycles is 1 day, or a sub-cycle duration of one of the sub-cycles is 12 hours, etc.

Average brushing data corresponding to each of the first sub-cycles is statistically collected according to the first historical brushing data, and average brushing data corresponding to each of the second sub-cycles is statistically collected according to the second historical brushing data. Then, the average brushing data corresponding to each of the first sub-circles and the average brushing data of the second sub-cycle corresponding to each of the first sub-circles are respectively compared to obtain the first comparison results respectively corresponding to the first sub-cycles.

For instance, each historical brushing cycle includes seven days from Monday to Sunday, which are divided into seven sub-cycles (i.e., the first historical brushing cycle includes 7 first sub-circles, and the second historical brushing cycle includes 7 second sub-circles). Each of the sub-cycles is corresponding to 1 day. The average brushing data for each day in the first historical brushing cycle and the average brushing data for each day in the second historical brushing cycle are calculated. Then, two sets of average brushing data both for Monday are compared, two sets of average brushing data both for Tuesday are compared, and so on, to obtain the first comparison results respectively corresponding to Monday to Sunday.

After the first comparison results corresponding to all first sub-cycles are obtained, whether the first comparison results corresponding to all first sub-cycles are within the at least one first preset range is determined. Optionally, when a quantity of first sub-cycles whose first comparison results are not within the at least one first preset range is greater than a quantity threshold, it indicates that the brushing habits or the brushing effects of the user become worse, and the required brushing strategy of the toothbrush is determined to be the second brushing strategy. When the quantity of first sub-cycles whose first comparison results are not within the at least one first preset range is not greater than the quantity threshold, it indicates that changes in the brushing habits or the brushing effects of the user are not significant, and the required brushing strategy of the toothbrush is determined to be the first brushing strategy. By comparing the brushing data of the first sub-cycles and the second sub-cycles and using the first comparison results corresponding to all first sub-cycles to determine the required brushing strategy of the toothbrush, variation in the brushing habits or the brushing effects of the user is accurately analyzed, thereby accurately determining the required brushing strategy of the user and improving the intelligence of the toothbrush.

It should be noted that the above two comparison modes are allowed to be combined. For example, when the average brushing data corresponding to the first sub-cycles is compared with the average brushing data corresponding to the second sub-cycles, the average brushing data of the same type are compared to obtain the first comparison results corresponding to the one or more types of brushing data in the first sub-cycles. Data comparison is performed more granularly, improving analysis accuracy of the variation in the brushing habits or the brushing effects of the user.

In some embodiments, the second brushing strategy includes sub-strategies, and the sub-strategies correspond to different toothbrush operating parameters. As shown in FIG. 4, the step of determining that the required brushing strategy of the toothbrush is the second brushing strategy includes steps 402-404.

The step 402 includes when the at least one first comparison result is not within the at least one first preset range, determining a target numerical range to which the at least one first comparison result belongs.

The sub-strategies corresponding to different toothbrush operating parameters refers to sub-strategies corresponding to different values of the toothbrush operating parameters. Optionally, the toothbrush operating parameters include, but are not limited to, at least one of: a motor frequency corresponding to an outer side of teeth, a motor duty cycle corresponding to the outer side of teeth, a frequency change time interval corresponding to the outer side of teeth, a motor frequency corresponding to an inner side of teeth, a motor duty cycle corresponding to the inner side of teeth, and a frequency change time interval corresponding to the inner side of teeth.

For instance, the second brushing strategy includes sub-strategy 1 and sub-strategy 2. Toothbrush operating parameters of sub-strategy 1 are listed as follows. The motor frequency corresponding to the outer side of teeth is 270 Hz (Hertz) or 295 Hz, the motor duty cycle corresponding to the outer side of teeth is 65% or 90%, the frequency change time interval corresponding to the outer side of teeth is 70 ms (milliseconds), the motor frequency corresponding to the inner side of teeth is 260 Hz or 285 Hz, the motor duty cycle corresponding to the outer side of teeth is 58% or 81%, and the frequency change time interval corresponding to the outer side of teeth is 45 ms. Toothbrush operating parameters of sub-strategy 2 are listed as follows. The motor frequency corresponding to the outer side of teeth is 263 Hz or 290 Hz, the motor duty cycle corresponding to the outer side of teeth is 65% or 85%, the frequency change time interval corresponding to the outer side of teeth is 70 ms, the motor frequency corresponding to the inner side of teeth is 255 Hz and 283 Hz, the motor duty cycle corresponding to the outer side of teeth is 60% and 85%, and the frequency change time interval corresponding to the outer side of teeth is 45 ms, but are not limited thereto. It should be noted that the toothbrush operating parameters corresponding to different sub-strategies are entirely different in value, or are partially the same in value. The toothbrush operating parameters corresponding to each of the sub-strategies are predetermined by a manufacturer according to actual requirements, or are predetermined by the user.

Since the sub-strategies correspond to different toothbrush operating parameters, the cleaning capabilities of the sub-strategies are different. For different sub-strategies, different numerical ranges are set. The numerical ranges refer to numerical ranges of the at least one first comparison result. Different numerical ranges are configured to represent different degrees of difference between the first historical brushing data and the second historical brushing data, that is, the numerical ranges are configured to represent degrees of deterioration of the brushing habits or the brushing effects of the user.

Therefore, in a case where the at least one first comparison result is not within the at least one first preset range, the target numerical range to which the at least one first comparison result belongs is determined, the target sub-strategy corresponding to the target numerical range is determined, and the required brushing strategy of the toothbrush is determined to be the target sub-strategy. When a degree of deterioration of the brushing habits or the brushing effects of the user is relatively large, a sub-strategy with a stronger cleaning capability is selected to improve the brushing effects. When the degree of deterioration of the brushing habits or the brushing effects of the user is relatively small, a sub-strategy with a slightly smaller cleaning capability but which is more comfortable and gentle is selected, so as to simultaneously account for cleaning intensity and brushing comfort, thereby improving user experience.

The step 404 includes determining the target sub-strategy corresponding to the target numerical range, and determining that the required brushing strategy of the toothbrush is the target sub-strategy.

In some embodiments, the historical brushing data includes the one or more types of brushing data, and each type of brushing data has a corresponding first preset range. For each type of brushing data, numerical ranges one-to-one correspond to the sub-strategies are set. When it is detected that there is a first comparison result corresponding to a first type of brushing data that is not within a first preset range corresponding to the first type of brushing data, a target numerical range to which the first comparison result corresponding to the first type of brushing data belongs is determined, the target sub-strategy corresponding to the target numerical range is determined, and the required brushing strategy of the toothbrush is determined to be the target sub-strategy.

For example, the first preset range corresponding to the average dental plaque residual amount is not greater than 5%. Assuming that a cleaning capability of sub-strategy 1 is greater than a cleaning capability of sub-strategy 2, a numerical range corresponding to sub-strategy 2 is set to 5%-15%, and a numerical range corresponding to sub-strategy 1 is set to not less than 15%, but are not limited thereto.

By providing the numerical ranges for different types of brushing data, the numerical ranges corresponding to each of the sub-strategies are granularly distinguished, which facilitates a detailed assessment of the brushing strategy actually required by the user from multiple dimensions, thereby improving accuracy of the required brushing strategy and improving the intelligence of the toothbrush.

In some embodiments, in a case where the second brushing strategy includes the sub-strategies, when the at least one first comparison result is not within the at least one first preset range and a current brushing strategy of the toothbrush is a first sub-strategy, the required brushing strategy of the toothbrush is determined to be a second sub-strategy. The second sub-strategy is a next sub-strategy of the first sub-strategy.

Optionally, the sub-strategies of the second brushing strategy are arranged according to a certain order, and an arrangement rule is determined according to actual requirements. For instance, the sub-strategies are arranged in descending order of priority according to priorities corresponding to the sub-strategies; or, the sub-strategies are randomly arranged; or, the sub-strategies are arranged according to a degree of user preference for each of the sub-strategies, but are not limited thereto. The priorities corresponding to the sub-strategies are determined according to cleaning capabilities corresponding to the sub-strategies. For example, a higher cleaning capability corresponds to a higher priority; and/or, the priorities corresponding to the sub-strategies are arranged according to comfort degrees corresponding to the sub-strategies, and a higher comfort degree corresponds to a higher priority, but are not limited thereto.

When the at least one first comparison result between the first historical brushing data and the second historical brushing data is not within the at least one first preset range and the current brushing strategy of the toothbrush is the first sub-strategy, it indicates that a brushing strategy operated in the first historical brushing cycle is the first sub-strategy. That is, a comparison result between the second historical brushing data corresponding to the second historical brushing cycle and historical brushing data corresponding to a brushing cycle prior to the second historical brushing cycle is also not within the at least one first preset range. Namely, adopting the first sub-strategy in the first historical brushing cycle does not improve the brushing habits or the brushing effects of the user. Therefore, when it is determined that the at least one first comparison result of the first historical brushing data and the second historical brushing data is not within the at least one first preset range, the required brushing strategy of the toothbrush is determined to be the next sub-strategy of the first sub-strategy, and the current brushing strategy is replaced to improve the brushing habits of the user and enhance the brushing effects.

Optionally, when the first sub-strategy of the toothbrush is a last sub-strategy arranged at an end of the arrangement order, a first one of the sub-strategies arranged at a head of the arrangement order is configured as the next sub-strategy of the first sub-strategy.

In some embodiments, when the at least one first comparison result is not within the at least one first preset range, the current brushing strategy of the toothbrush is the first sub-strategy, and the first sub-strategy is not the last sub-strategy, the required brushing strategy of the toothbrush is determined to be the second sub-strategy. When the at least one first comparison result is not within the at least one first preset range, the current brushing strategy of the toothbrush is the first sub-strategy, and the first sub-strategy is the last sub-strategy, the required brushing strategy of the toothbrush continues to be determined as the first sub-strategy.

When the at least one first comparison result between the first historical brushing data and the second historical brushing data is not within the at least one first preset range and the current brushing strategy of the toothbrush is the first sub-strategy, whether the first sub-strategy is the last sub-strategy is determined. When the current first sub-strategy is not the last sub-strategy, the required brushing strategy of the toothbrush is determined to be the next sub-strategy of the first sub-strategy, and the current brushing strategy is replaced. When the current first sub-strategy is the last sub-strategy, the required brushing strategy of the toothbrush continues to be determined as the first sub-strategy without replacing the current brushing strategy.

In one specific implementation, the second brushing strategy includes M sub-strategies. When the at least one first comparison result between the first historical brushing data and the second historical brushing data is not within the at least one first preset range and the current brushing strategy of the toothbrush is the first sub-strategy, a cumulative count N is determined. The cumulative count N refers to the number of brushing cycles in which the toothbrush cumulatively operates the sub-strategies in the second brushing strategy.

Whether the cumulative count N is less than a count threshold M is determined. When the cumulative count N is less than the count threshold M, the required brushing strategy of the toothbrush is determined to be the second sub-strategy, where the current first sub-strategy is an N-th sub-strategy, and the second sub-strategy is an (N+1)-th sub-strategy. When the cumulative count N is not less than the count threshold M, the required brushing strategy of the toothbrush continues to be determined as the first sub-strategy, where the current first sub-strategy is an M-th sub-strategy.

In the embodiments of the present disclosure, by flexibly replacing the current brushing strategy of the toothbrush, the required brushing strategy of the user is accurately determined, which improves the brushing habits and the brushing effects of the user.

The step 312 includes in response to a toothbrush startup instruction, controlling the toothbrush to operate according to the required brushing strategy.

The toothbrush startup instruction includes a toothbrush power-on instruction, and/or a toothbrush wakeup instruction, etc. The toothbrush power-on instruction is configured to instruct the toothbrush to power on, and the toothbrush wakeup instruction is configured to instruct the toothbrush to wake up from a standby state. When the electronic device receives the toothbrush startup instruction, the electronic device controls the toothbrush to operate according to the required brushing strategy, and controls the toothbrush to operate according to a toothbrush operating mode corresponding to the required brushing strategy.

It should be noted that the electronic device determines the required brushing strategy of the toothbrush according to the historical brushing record before receiving the toothbrush startup instruction, and then controls the toothbrush to operate according to the required brushing strategy when the toothbrush startup instruction is received. Alternatively, the electronic device determines the required brushing strategy of the toothbrush according to the historical brushing record after receiving the toothbrush startup instruction, and then controls the toothbrush to operate according to the required brushing strategy.

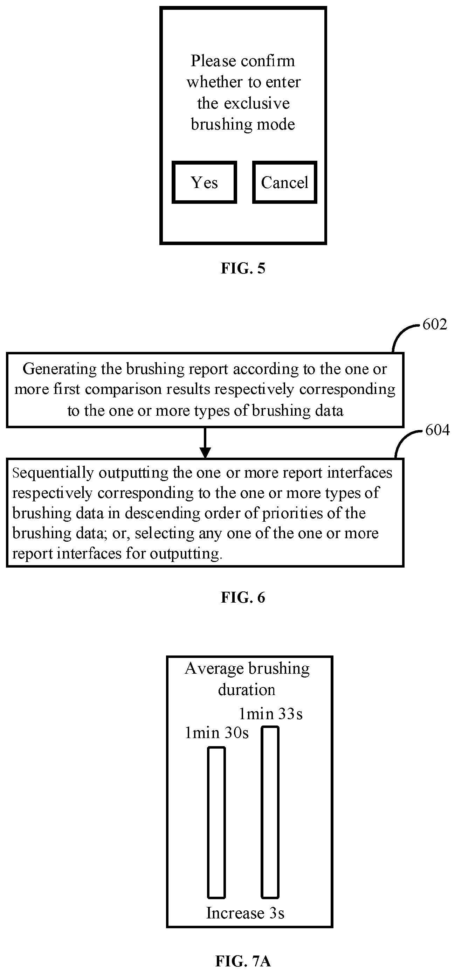

In some embodiments, when the required brushing strategy is the second brushing strategy, strategy prompt information is output, and the strategy prompt information is configured to indicate selection of whether to operate according to the second brushing strategy. Optionally, a manner of outputting the strategy prompt information includes, but is not limited to, outputting the strategy prompt information in a form of text and/or an image through the display device, outputting the strategy prompt information in a form of voice through an audio playback module, etc. FIG. 5 is a schematic diagram of an interface for outputting strategy prompt information according to one embodiment of the present disclosure. As shown in FIG. 5, the strategy prompt information "Please confirm whether to enter the exclusive brushing mode" is output in the form of text through the display device. Then, the user selects whether to let the toothbrush enter the exclusive brushing mode (i.e., the second brushing strategy described above) by triggering a confirmation control or a cancellation control on the interface.

When the user confirms to let the toothbrush operate according to the second brushing strategy, a confirmation operation is performed. The confirmation operation is configured to indicate determination to operate according to the second brushing strategy. An operation manner of the confirmation operation includes, but is not limited to, pressing a first designated button on the toothbrush, inputting a first designated gesture, inputting a voice instructing confirmation to operate according to the second brushing strategy, etc. The operation manner of the confirmation operation is determined according to actual requirements. When the electronic device detects the confirmation operation for the strategy prompt information, the electronic device controls the toothbrush to operate according to the second brushing strategy.

When the user confirms not to let the toothbrush operate according to the second brushing strategy, a cancellation operation is performed. The cancellation operation is configured to indicate not to operate according to the second brushing strategy. An operation manner of the cancellation operation includes, but is not limited to, pressing a second designated button on the toothbrush, inputting a second designated gesture, inputting a voice instructing cancellation of operation according to the second brushing strategy, etc. The operation manner of the cancellation operation is determined according to actual requirements. When the electronic device detects the cancellation operation for the strategy prompt information, the electronic device controls the toothbrush to operate according to the first brushing strategy.

In the embodiments of the present disclosure, by outputting the strategy prompt information, the user is allowed to select whether to let the toothbrush operate according to the second brushing strategy according to actual situations, which satisfies different requirements of the user and improves user experience.

In some embodiments, in a case where the confirmation operation for the strategy prompt information is detected, the second brushing strategy is configured as a default brushing strategy, so that the toothbrush operates according to the second brushing strategy by default each time the toothbrush is started within a current brushing cycle.

In a case where the user confirms to let the toothbrush operate according to the second brushing strategy, the electronic device configures the second brushing strategy as the default brushing strategy. Optionally, a default tag corresponding to the second brushing strategy is added. Within the current brushing cycle, each time the toothbrush is started (such as power-on or wakeup), the toothbrush operates according to the second brushing strategy by default according to the default tag corresponding to the second brushing strategy. Optionally, the second brushing strategy is configured with a highest priority, that is, a priority of the second brushing strategy is higher than a priority of the first brushing strategy. Within the current brushing cycle, each time the toothbrush is started (such as power-on or wakeup), the toothbrush operates according to a brushing strategy with the highest priority (i.e., the second brushing strategy) by default. Optionally, a strategy list is stored in the toothbrush, and the strategy list includes supported brushing strategies. The second brushing strategy is adjusted to a head position (i.e., a first position) of the strategy list. Within the current brushing cycle, each time the toothbrush is started (such as power-on or wakeup), the toothbrush operates according to a brushing strategy arranged at the first position of the strategy list (i.e., the second brushing strategy) by default.

In some embodiments, the second brushing strategy includes the sub-strategies. In a case where the electronic device determines that the required brushing strategy of the toothbrush is the target sub-strategy and detects a confirmation operation for the target sub-strategy, that is, the user confirms to let the toothbrush operate according to the target sub-strategy, the target sub-strategy is configured as the default brushing strategy, so that the toothbrush operates according to the target sub-strategy by default each time the toothbrush is started within the current brushing cycle. Configuring the target sub-strategy as the default brushing strategy includes, but is not limited to, any one of: adding a default tag corresponding to the target sub-strategy, configuring the target sub-strategy with a highest priority, adjusting the target sub-strategy to the first position of the strategy list, etc.

In the embodiments of the present disclosure, in a case where the user confirms to let the toothbrush operate according to the second brushing strategy, the second brushing strategy is configured as the default brushing strategy, so that the toothbrush operates according to the second brushing strategy by default each time the toothbrush is started within the current brushing cycle. The user only needs to perform confirmation once instead of performing confirmation each time the toothbrush is started, which simplifies user operations and improves the intelligence of the toothbrush.

In some embodiments, in a case where the cancellation operation for the strategy prompt information is detected, the electronic device deletes the first historical brushing data corresponding to the first historical brushing cycle. When the user confirms not to let the toothbrush operate according to the second brushing strategy, it is determined that the second brushing strategy does not meet actual requirements of the user, indicating that the at least one first comparison result obtained this time is inaccurate. Therefore, in the case where the cancellation operation for the strategy prompt information is detected, the first historical brushing data corresponding to the first historical brushing cycle is deleted. In a case where the current brushing cycle ends, the electronic device compares brushing data corresponding to the current brushing cycle with the second historical brushing data corresponding to the second historical brushing cycle to obtain new at least one first comparison result, and determines the required brushing strategy of the toothbrush in a next brushing cycle according to the new at least one first comparison result, so that the required brushing strategy more conforms to the actual requirements of the user and accuracy of the required brushing strategy is improved.

In the embodiments of the present disclosure, whether the brushing habits or the brushing effects of the user become worse is accurately analyzed by comparing the historical brushing data of the two historical brushing cycles, and the required brushing strategy that more conforms to the actual requirements of the user is determined according to the at least one first comparison result, which improves the accuracy of the required brushing strategy and improves the intelligence of the toothbrush.

In some embodiments, in the method for determining the brushing strategy described above, after the at least one first comparison result is obtained, a brushing report is generated according to the at least one first comparison result, and the brushing report is output.

The brushing report is configured to feed back to the variation in brushing data of the user in the first historical brushing cycle and the second historical brushing cycle, a comparison between the brushing data of the first historical brushing cycle and the brushing data of the second historical brushing cycle, etc. A manner of outputting the brushing report includes, but is not limited to, outputting the brushing report in a form of text and/or a chart through the display device, outputting the brushing report in a form of voice through the audio playback device, etc.

In some embodiments, each time the toothbrush is woken up or powered on, the toothbrush is controlled to output the brushing report, thereby improving brushing motivation of the user. Optionally, the brushing report is generated according to the at least one first comparison result and is output only in a case where the required brushing strategy of the toothbrush is determined to be the second brushing strategy. That is, in a case where the required brushing strategy of the toothbrush is the first brushing strategy, the brushing report is not generated, or the brushing report is generated but the toothbrush is not controlled to output the brushing report. When the required brushing strategy of the toothbrush is determined to be the first brushing strategy, it indicates that the brushing habits or the brushing effects of the user are not significantly worse, and thus the toothbrush is not required to output the brushing report, which reduces waiting time for the user to start brushing and reduces adverse effects of the brushing report on the user.

In one embodiment, the historical brushing data includes the one or more types of brushing data. After brushing data belonging to the same type in the first historical brushing data and the second historical brushing data are compared to obtain the one or more first comparison results respectively corresponding to the one or more types of brushing data, the brushing report is generated according to the one or more first comparison results respectively corresponding to the one or more types of brushing data, and the brushing report is output. As shown in FIG. 6, the step of generating the brushing report according to the at least one first comparison result and outputting the brushing report includes steps 602-604.

The step 602 includes generating the brushing report according to the one or more first comparison results respectively corresponding to the one or more types of brushing data. The brushing report includes one or more report interfaces one-to-one corresponding to the one or more types of brushing data.

The brushing report includes the one or more report interfaces corresponding to the one or more types of brushing data, and each report interface is configured to display a first comparison result corresponding to a corresponding type of brushing data. Optionally, specific data of the corresponding type of brushing data in the first historical brushing cycle and specific data in the second historical brushing cycle are also displayed. For example, a report interface corresponding to the brushing duration displays a brushing duration comparison result between the first historical brushing cycle and the second historical brushing cycle (such as a comparison result of average brushing durations of the two historical brushing cycles, a comparison result of total brushing durations of the two historical brushing cycles, etc), and also displays an average brushing duration of each day in the first historical brushing cycle, an average brushing duration of each day in the second historical brushing cycle, and/or displays the brushing duration of each brushing process in the first historical brushing cycle, the brushing duration of each brushing process in the second historical brushing cycle, which are not limited thereto.

FIG. 7A is a schematic diagram of a report interface corresponding to a brushing duration according to one embodiment of the present disclosure. As shown in FIG. 7A, the report interface corresponding to the brushing duration displays an average brushing duration of the first historical brushing cycle (1 min 33 s), an average brushing duration of the second historical brushing cycle (1 min 30 s), a comparison result of the average brushing duration of the first historical brushing cycle and the average brushing duration of the second historical brushing cycle (an increase of 3 seconds), etc.

Further, for each type of brushing data, a main report interface and one or more sub-report interfaces are generated. Specific data presented by the main report interface and the one or more sub-report interface are different. For instance, the main report interface displays the first comparison result corresponding to corresponding type of brushing data, and the one or more sub-report interfaces display the specific data of the corresponding type of brushing data in the first historical brushing cycle and the specific data in the second historical brushing cycle. The main report interface provides one or more entry control areas for entering the one or more sub-report interfaces, and the user is able to select to enter a corresponding sub-report interface by triggering one of the one or more entry control areas.

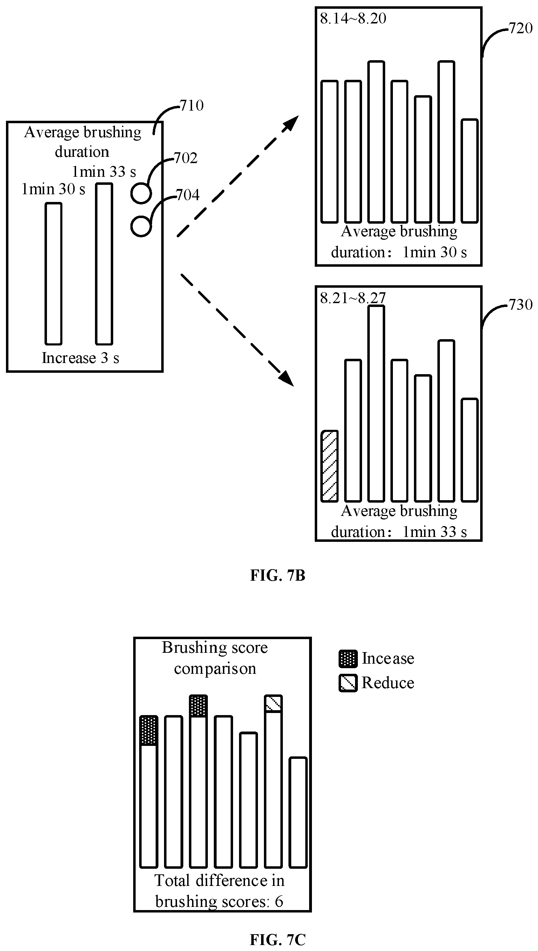

FIG. 7B is a schematic diagram of the report interface corresponding to the brushing duration according to another embodiment of the present disclosure. As shown in FIG. 7B, the main report interface 710 corresponding to the brushing duration displays the average brushing duration of the first historical brushing cycle (1 min 33 s), the average brushing duration of the second historical brushing cycle (1 min 30 s), the comparison result of the average brushing duration of the first historical brushing cycle and the average brushing duration of the second historical brushing cycle (an increase of 3 s), etc. The main report interface 710 includes an entry control area 702 and an entry control area 704. The entry control area 702 is configured for jumping to a sub-interface 720, and the entry control area 704 is configured for jumping to a sub-interface 730. The sub-interface 720 displays the average brushing duration of each day in the second historical brushing cycle (e.g., August 14 to August 20) and the average brushing duration of the entire second historical brushing cycle (1 min 30 s). The sub-interface 730 displays the average brushing duration of each day in the first historical brushing cycle (e.g., August 21 to August 27) and the average brushing duration of the entire first historical brushing cycle (1 min 33 s). The user is able to view the brushing data according to actual requirements. Information displayed in the brushing report is abundant, thus satisfying different requirements of the user.

Optionally, for each type of brushing data, a corresponding standard indicator is provided. When it is detected that one type of brushing data does not satisfy the corresponding standard indicator, a prompt is presented in a corresponding report interface. A manner of the prompt includes, but is not limited to, displaying brushing data that does not satisfy the standard indicator in a set color, displaying the one type of brushing data that does not satisfy the corresponding standard indicator in an enlarged manner, or displaying an indication icon (such as an indication line, etc.) corresponding to the corresponding standard indicator in the report interface, etc. For instance, taking the sub-interface 730 in FIG. 7B as an example, when the average brushing duration of a first day does not reach a standard indicator of the brushing duration (e.g., 1 min 25 s), a filled bar chart is displayed to prompt the user to pay attention to the brushing data that does not satisfy the standard indicator.

The step 604 includes sequentially outputting the one or more report interfaces respectively corresponding to the one or more types of brushing data in descending order of priorities of the brushing data; or, selecting any one of the one or more report interfaces for outputting.

In some embodiments, in a case where there are types of brushing data, priorities corresponding to the types of brushing data are determined, and report interfaces respectively corresponding to the types of brushing data are sequentially output in descending order of the priorities of the brushing data. For example, a priority of the brushing duration is set to be higher than a priority of the brushing pressure, the priority of the brushing pressure is higher than a priority of a dental plaque cleaning rate, the priority of the dental plaque cleaning rate is higher than a priority of a dental plaque residual amount, etc. Then, the report interface of the brushing duration, the report interface of the brushing pressure, the report interface of the dental plaque cleaning rate, and the report interface of the dental plaque residual amount are sequentially output in descending order of the priorities.

Optionally, a switching display time interval of the report interfaces is set, and the report interfaces respectively corresponding to the types of brushing data are sequentially output according to the switching display time interval. For example, the report interfaces are switched once every 2 seconds, and the report interfaces respectively corresponding to the types of brushing data are sequentially output in descending order of the priorities of the brushing data.

Optionally, the report interfaces are not switched actively, but are switched manually by the user. When a switching operation input by the user is detected, a current report interface is switched to a next report interface. For instance, in descending order of the priorities of the brushing data, the report interface corresponding to the brushing data with the highest priority is displayed first, and when the switching operation is detected, the current report interface with the highest priority is switched to the report interface corresponding to the brushing data with the second highest priority for display. When the switching operation is detected again, the current report interface is switched to the report interface corresponding to the brushing data with a next priority for display, and so on.

The priorities corresponding to the types of brushing data are uniformly set by the manufacturer according to actual requirements, or are set by the user according to personal requirements. In some embodiments, a browsing frequency and/or a browsing duration of the user viewing the report interfaces of the types of brushing data in a past period of time are statistically collected, and the priorities corresponding to the types of brushing data are determined according to the browsing frequency and/or the browsing duration of the report interfaces of the types of brushing data in the past period of time. Further, a higher browsing frequency and/or a longer browsing duration corresponds to a higher priority. By analyzing browsing habits of the user to adjust the priorities corresponding to the types of brushing data and thereby determining an output order of the report interfaces, interest of the user in viewing the report interfaces is improved, which better fits the browsing habits and focus of the user.

In some embodiments, the electronic device may select any one of the report interfaces for outputting. For example, a report interface corresponding to any type of brushing data is randomly selected for outputting, or a report interface, with the longest browsing duration when the user previously views the brushing report, is selected for outputting, but are not limited thereto.

In the embodiments of the present disclosure, the report interfaces are generated for different types of brushing data, which enriches content displayed in the brushing report, allows the user to better understand the historical brushing data and the first comparison results of the two historical brushing cycles, and satisfies different requirements of the user.

In one embodiment, the first historical brushing cycle includes first sub-cycles, and the second historical brushing cycle includes second sub-cycles. In a case where average brushing data corresponding to each of the first sub-circles is compared with average brushing data of a corresponding one of the second sub-cycle to obtain the first comparison results respectively corresponding to the first sub-cycles. The step of generating the brushing report according to the at least one first comparison result and outputting the brushing report includes generating the brushing report according to the first comparison results respectively corresponding to the first sub-cycles. The brushing report includes the first comparison results respectively corresponding to the first sub-cycles, and/or a total result of the first comparison results corresponding to the first sub-cycles.

In some embodiments, the brushing report includes the first comparison results respectively corresponding to the first sub-cycles. For example, each of the historical brushing cycles includes 7 days from Monday to Sunday, and the brushing report includes the first comparison results respectively corresponding to Monday to Sunday.

Optionally, the first comparison results respectively corresponding to the first sub-cycles include brushing score differences between brushing scores of the first sub-cycles and brushing scores of the second sub-cycles. The brushing report includes the brushing score differences corresponding to the first sub-cycles, and/or includes a sum of the brushing score differences corresponding to the first sub-cycles. FIG. 7C is a schematic diagram of the brushing report according to one embodiment of the present disclosure. As shown in FIG. 7C, the brushing report displays brushing score comparison results respectively corresponding to Monday to Sunday for the two historical brushing cycles, and the sum of the brushing score differences.

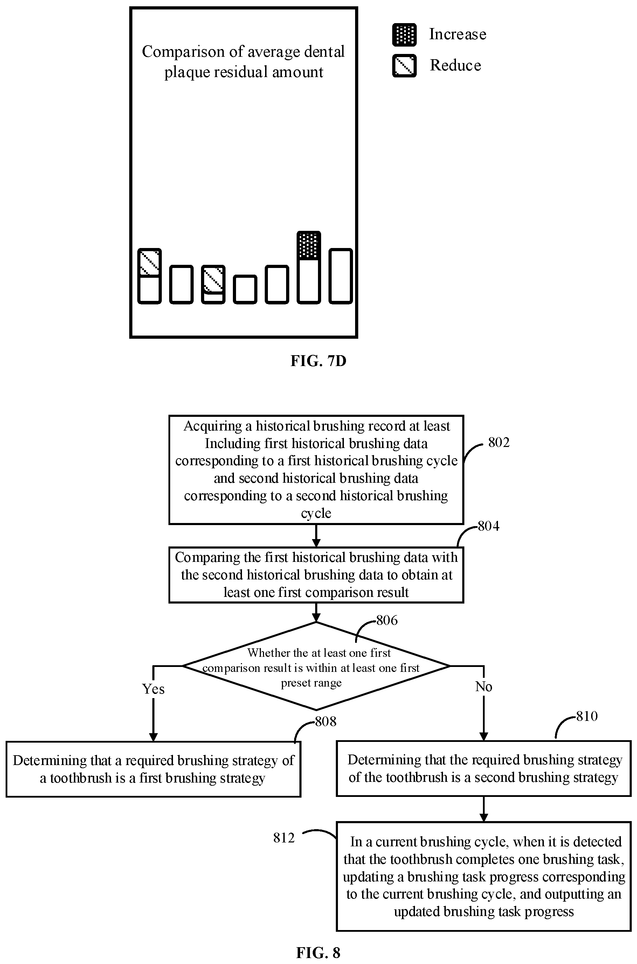

In some embodiments, the historical brushing data includes the one or more types of brushing data. A first comparison result of a certain type of brushing data corresponding to each of the first sub-circles is selected to generate the brushing report. For example, a first comparison result of the brushing data of the dental plaque residual amount is selected to generate the brushing report. Specifically, an average dental plaque residual amount corresponding to each of the first sub-circles is compared with an average dental plaque residual amount of a corresponding second sub-cycle to obtain first comparison results of the average dental plaque residual amount corresponding to the first sub-cycles. FIG. 7D is a schematic diagram of a brushing report according to another embodiment of the present disclosure. As shown in FIG. 7D, the brushing report displays first comparison results of the average dental plaque residual amount respectively corresponding to Monday to Sunday for the two historical brushing cycles.

In the embodiments of the present disclosure, the brushing report is generated according to the first comparison results of sub-cycles corresponding to the two historical brushing cycles. The user is able to intuitively see changes in brushing data of the sub-cycles in a same stage, which allows the user to better understand the historical brushing data and the first comparison results of the two historical brushing cycles, satisfying different requirements of the user.

As shown in FIG. 8, in another embodiment, a method for determining a brushing strategy is provided, which is applied to an electronic device. The method includes steps 802-812.

The step 802 includes acquiring a historical brushing record. The historical brushing record at least includes first historical brushing data corresponding to a first historical brushing cycle and second historical brushing data corresponding to a second historical brushing cycle.

The step 804 includes comparing the first historical brushing data with the second historical brushing data to obtain at least one first comparison result.

The step 806 includes determining whether the at least one first comparison result is within at least one first preset range; if yes, executing the step 808; and if not, executing the step 81.

The step 808 includes determining that a required brushing strategy of a toothbrush is a first brushing strategy.

The step 810 includes determining that the required brushing strategy of the toothbrush is a second brushing strategy.

The step 812 includes in a current brushing cycle, when it is detected that the toothbrush completes one brushing task, updating a brushing task progress corresponding to the current brushing cycle, and outputting an updated brushing task progress.

The electronic device pre-sets one or more brushing tasks. A brushing task is configured for specifying a target indicator to be reached in one brushing process. For instance, the brushing task is a brushing duration reaching 1 min 30 s, a brushing dental area coverage reaching 100%, or a dental plaque cleaning rate reaching 90%, etc, which is not limited thereto.

The brushing task progress is configured to represent a completion status of the brushing task in the current brushing cycle, and is configured to describe a completion status of an improvement plan for improving the brushing habits of the user by the toothbrush operating according to the second brushing strategy. When the brushing task progress is completed, it indicates that the improvement plan is finished.

Optionally, in each brushing process of the toothbrush, when it is detected that the toothbrush completes one brushing task, the brushing task progress corresponding to the current brushing cycle is updated. Further, a task progress corresponding to each completed brushing task is determined. For example, each time one brushing task is completed, a corresponding task progress is 20%, and then a completion progress of 20% is added to the brushing task progress corresponding to the current brushing cycle.

When different brushing tasks are simultaneously completed in a same brushing process (for example, the brushing duration reaches 1 min 30 s and the dental plaque cleaning rate reaches 90%), the brushing task progress corresponding to the current brushing cycle is updated only once. In this way, it avoids a problem where the brushing task progress is inaccurate due to repeated updates caused by reaching target indicators of brushing tasks multiple times in the same brushing process, so that the brushing task progress accurately displays the completion status of the improvement plan.

In some embodiments, each time the toothbrush is powered on or woken up, the toothbrush is controlled to output a latest brushing task progress and the brushing report; and/or, after each update to the brushing task progress, the updated brushing task progress is output. Embodiments of the present disclosure do not limit the timing of outputting the brushing task progress. A manner of outputting the brushing task progress includes, but is not limited to, outputting in a form of text and/or a chart through the display device.

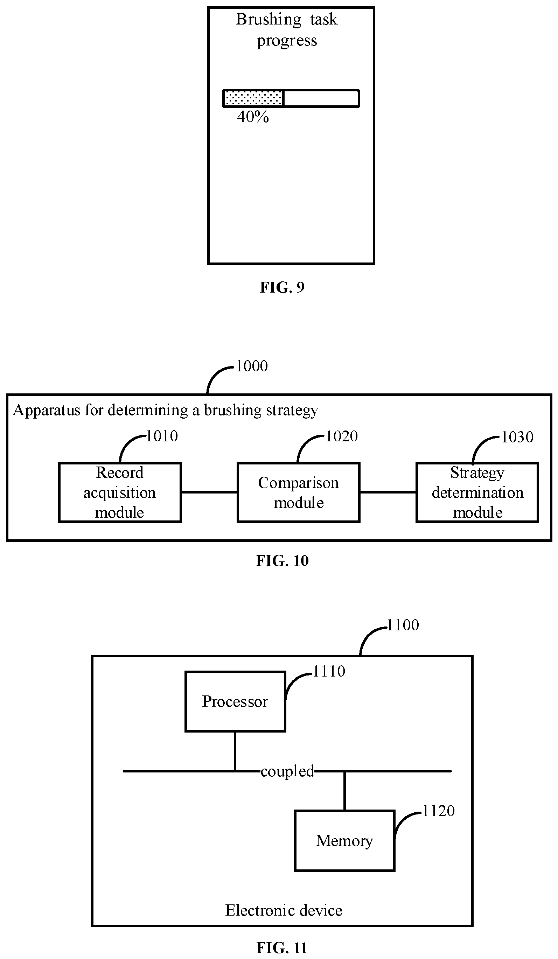

FIG. 9 is a schematic diagram of displaying a brushing task progress according to one embodiment of the present disclosure. As shown in FIG. 9, a progress bar representing the brushing task progress is displayed through the display device, and the completion degree of the brushing task progress is displayed as 40%.

In some embodiments, in a case where the brushing task progress corresponding to the current brushing cycle is determined to be completed, brushing data corresponding to the current brushing cycle is acquired, and the brushing data is compared with the first historical brushing data to obtain at least one second comparison result. When the at least one second comparison result is within at least one second preset range, the required brushing strategy of the toothbrush is determined to be the first brushing strategy. When the at least one second comparison result is not within the at least one second preset range, the required brushing strategy of the toothbrush is determined to be the second brushing strategy.

The completion of the brushing task progress corresponds to the current brushing cycle refers to a completion degree of the brushing task progress corresponding to the current brushing cycle being 100%. When the brushing task progress corresponding to the current brushing cycle is completed, it indicates that the improvement plan for improving the brushing habits of the user by the toothbrush operating according to the second brushing strategy is finished. The electronic device acquires the brushing data corresponding to the current brushing cycle, and compares the brushing data corresponding to the current brushing cycle with the first historical brushing data to obtain the at least one second comparison result. When the at least one second comparison result is within the at least one second preset range, it indicates that the brushing habits or the brushing effects of the user have improved, and the required brushing strategy of the toothbrush is determined to be the first brushing strategy, and the toothbrush is controlled to switch to the first brushing strategy, so that a more comfortable brushing strategy (i.e., the first brushing strategy) is selected and the brushing comfort of the user is improved.

When the at least one second comparison result is not within the at least one second preset range, it indicates that the brushing habits or the brushing effects of the user have not improved, and the toothbrush is controlled to continue operating according to the second brushing strategy to improve the brushing habits of the user and enhance the brushing effects.

It should be noted that the at least one second preset range is the same as or different from the at least one first preset range in the above embodiments, which is not limited herein. A determination manner of whether the at least one second comparison result is within the at least one second preset range is similar to the determination manner of whether the at least one first comparison result is within the at least one first preset range described in the above embodiments. Relevant descriptions in the above embodiments are referred to, and details are not repeated herein.

In the embodiments of the present disclosure, the brushing task progress corresponding to the current brushing cycle is updated according to the brushing task completed by the toothbrush, so as to accurately reflect the completion status of the improvement plan for improving the brushing habits of the user by the toothbrush operating according to the second brushing strategy, thereby helping to better improve the brushing habits and the brushing effects of the user, and further improving the intelligence of the toothbrush.

As shown in FIG. 10, in one embodiment, the present disclosure provides an apparatus 1000 for determining a brushing strategy. The apparatus 1000 includes a record acquisition module 1010, a comparison module 1020, and a strategy determination module 1030.

The record acquisition module 1010 is configured to acquire a historical brushing record. The historical brushing record at least includes first historical brushing data corresponding to a first historical brushing cycle and second historical brushing data corresponding to a second historical brushing cycle.

The comparison module 1020 is configured to compare the first historical brushing data with the second historical brushing data to obtain at least one first comparison result.

When the at least one first comparison result is within at least one first preset range, the strategy determination module 1030 is configured to determine that a required brushing strategy of a toothbrush is a first brushing strategy. When the at least one first comparison result is not within the at least one first preset range, the strategy determination module 1030 is configured to determine that the required brushing strategy of the toothbrush is a second brushing strategy.

In one embodiment, a motor frequency corresponding to the second brushing strategy is greater than a motor frequency corresponding to the first brushing strategy; and/or a motor duty cycle corresponding to the second brushing strategy is greater than a motor duty cycle corresponding to the first brushing strategy; and/or a motor operating duration corresponding to the second brushing strategy is not less than a motor operating duration corresponding to the first brushing strategy; and/or a frequency change time interval corresponding to the second brushing strategy is less than a frequency change time interval corresponding to the first brushing strategy.

In one embodiment, the second brushing strategy includes sub-strategies, and the sub-strategies correspond to different toothbrush operating parameters. When the at least one first comparison result is not within the at least one first preset range, the strategy determination module 1030 is configured to determine a target numerical range to which the at least one first comparison result belongs, determine a target sub-strategy corresponding to the target numerical range, and determine that the required brushing strategy of the toothbrush is the target sub-strategy.

In one embodiment, the second brushing strategy includes sub-strategies, and the sub-strategies correspond to different toothbrush operating parameters. When the at least one first comparison result is not within the at least one first preset range, and a current brushing strategy of the toothbrush is a first sub-strategy, the strategy determination module 1030 is configured to determine that the required brushing strategy of the toothbrush is a second sub-strategy. The second sub-strategy is a next sub-strategy of the first sub-strategy.

In one embodiment, the second brushing strategy includes sub-strategies, and the sub-strategies correspond to different toothbrush operating parameters. When the at least one first comparison result is not within the at least one first preset range, a current brushing strategy of the toothbrush is a first sub-strategy, and the first sub-strategy is not a last sub-strategy, the strategy determination module 1030 is configured to determine that the required brushing strategy of the toothbrush is a second sub-strategy. The second sub-strategy is a next sub-strategy of the first sub-strategy. When the at least one first comparison result is not within the at least one first preset range, the current brushing strategy of the toothbrush is the first sub-strategy, and the first sub-strategy is the last sub-strategy, the strategy determination module 1030 is configured to continue to determine that the required brushing strategy of the toothbrush is the first sub-strategy.

In one embodiment, the toothbrush operating parameters include at least one of: a motor frequency corresponding to an outer side of teeth, a motor duty cycle corresponding to the outer side of the teeth, a frequency change time interval corresponding to the outer side of the teeth, a motor frequency corresponding to an inner side of the teeth, a motor duty cycle corresponding to the inner side of the teeth, and a frequency change time interval corresponding to the inner side of the teeth.

In one embodiment, the apparatus 1000 further includes a control module. In response to a toothbrush startup instruction, the control module is configured to control the toothbrush to operate according to the required brushing strategy.

In one embodiment, when the required brushing strategy is the second brushing strategy, the control module is configured to output strategy prompt information. The strategy prompt information is configured to indicate selection of whether to operate according to the second brushing strategy. When a confirmation operation for the strategy prompt information is detected, the control module is configured to control the toothbrush to operate according to the second brushing strategy. The confirmation operation is used for indicating determination to operate the toothbrush according to the second brushing strategy.

In one embodiment, when the confirmation operation for the strategy prompt information is detected, the control module is configured to configure the second brushing strategy as a default brushing strategy, so that the toothbrush operates according to the second brushing strategy by default each time the toothbrush is started within a current brushing cycle.

In one embodiment, after outputting the strategy prompt information, when a cancellation operation for the strategy prompt information is detected, the control module is further configured to control the toothbrush to operate according to the first brushing strategy. The cancellation operation is configured to indicate not to operate the toothbrush according to the second brushing strategy.

In one embodiment, the first historical brushing cycle is a previous brushing cycle of the current brushing cycle. When the cancellation operation for the strategy prompt information is detected, the control module is further configured to delete the first historical brushing data corresponding to the first historical brushing cycle.

In one embodiment, the apparatus further includes a report generation module. The report generation module is configured to generate a brushing report according to the at least one first comparison result and output the brushing report.

In one embodiment, the historical brushing data includes one or more types of brushing data. The comparison module 1020 is configured to compare brushing data belonging to a same type in the first historical brushing data and the second historical brushing data to obtain one or more first comparison results respectively corresponding to the one or more types of brushing data. The at least one first comparison result includes first comparison results, and the at least one preset range includes first preset ranges. When the first comparison results corresponding to all types of brushing data are within the first preset ranges of all types of brushing data, the strategy determination module 1030 is further configured to determine that the required brushing strategy of the toothbrush is the first brushing strategy. When there is a first comparison result corresponding to a first type of brushing data that is not within a first preset range corresponding to the first type of brushing data, the strategy determination module 1030 is further configured to determine that the required brushing strategy of the toothbrush is the second brushing strategy, wherein the first type of brushing data is any type of brushing data.

In one embodiment, the historical brushing data includes at least one type of brushing data of: brushing duration, a brushing cleaning rate, a brushing dental area coverage, a brushing pressure, a dental plaque cleaning rate, and a dental plaque residual amount.

In one embodiment, the report generation module is further configured to generate the brushing report according to the at least one first comparison result corresponding to the one or more types of brushing data. The brushing report includes one or more report interfaces one-to-one corresponding to the one or more types of brushing data. The report generation module is further configured to sequentially output the one or more report interfaces one-to-one corresponding to the one or more types of brushing data in a descending order of priorities of the one or more types of brushing data; or select any one of the one or more report interfaces to output.

In one embodiment, the first historical brushing cycle includes first sub-cycles, the second historical brushing cycle includes second sub-cycles, and the first sub-cycles are one-to-one corresponding to the second sub-cycles. The comparison module 1020 is configured to calculate average brushing data one-to-one corresponding to the first sub-cycles according to the first historical brushing data, calculate average brushing data one-to-one corresponding to the second sub-cycles according to the second historical brushing data, and respectively compare the average brushing data one-to-one corresponding to the first sub-cycles with the average brushing data one-to-one corresponding to the second sub-cycles to obtain first comparison results respectively corresponding to the first sub-cycles.

In one embodiment, the report generation module is further configured to generate the brushing report according to the first comparison results respectively corresponding to the first sub-cycles. The brushing report includes the first comparison results respectively corresponding to the first sub-cycles and/or a total result of the first comparison results corresponding to the first sub-cycles.

In one embodiment, under a condition that the required brushing strategy of the toothbrush is determined as the second brushing strategy, the report generation module is further configured to generate the brushing report according to the at least one first comparison result and output the brushing report.

In one embodiment, under a condition that the brushing task progress corresponding to the current brushing cycle is completed, the record acquisition module 1010 is configured to reacquire brushing data corresponding to the current brushing cycle. The comparison module is configured to compare the brushing data with the first historical brushing data to obtain at least one second comparison result. When the at least one second comparison result is within at least one second preset range, the strategy determination module is configured to determine that the required brushing strategy of the toothbrush is the first brushing strategy. When the at least one second comparison result is not within the at least one second preset range, the strategy determination module is configured to determine that the required brushing strategy of the toothbrush is the second brushing strategy.

In the embodiments of the present disclosure, whether the brushing habits or the brushing effects of the user become worse is accurately analyzed by comparing the historical brushing data of the two historical brushing cycles (i.e., the first historical brushing cycle and the second historical brushing cycle). When the brushing habits or the brushing effects of the user become worse, the required brushing strategy of the toothbrush is determined to be the second brushing strategy with the stronger cleaning capability, thereby improving the brushing habits of the user, enhancing the brushing effects, accurately determining the required brushing strategy of the user, improving accuracy of the determined brushing strategy, and improving the intelligence of the toothbrush.

FIG. 11 is a block diagram of an electronic device according to one embodiment of the present disclosure. As shown in FIG. 11, the electronic device 1100 includes at least one memory 1120 and at least one processor 1110. At least one computer program is stored in the at least one memory 1120. When the at least one more computer program is executed by the at least one processor 1110, the one or more processors implement the method described above.

The at least one processor 1110 includes one or more processing cores. The at least one processor 1110 uses various interfaces and lines to connect various parts of the oral care device 900. The processor 910 executes various functions and processes data of the oral care device 900 by running or executing instructions, programs, code sets or instruction sets stored in the at least one memory 1120, and calling data stored in the at least one memory 1120. Optionally, the at least one processor 1110 is implemented by at least one hardware of a digital signal processing (DSP), a field programmable gate array (FPGA), and a programmable logic array (PLA). The at least one processor 1110 may integrate one or a combination of a central processing unit (CPU), a graphics processing unit (GPU), and a modem. The CPU mainly processes an operating system and an application for the oral care device 900. The GPU is responsible for rendering and drawing content to be displayed on the display screen. The modem is configured to process wireless communications. It is understood that the modem may not be integrated into the at least one processor 1110, but implemented by a chip.

The at least one memory 1120 may be a random access memory (RAM) or a read-only memory (ROM). Optionally, the at least one memory 1120 may be a non-transitory computer-readable medium. The at least one memory 1120 is configured to store the instructions, the programs, the codes, the code sets or the instruction sets. The at least one memory 1120 includes a program storage area and a data storage area. The program storage area stores the instructions for implementing the operating system, the instructions for at least one function (such as a receiving function, a control function, a determination function, etc.), the instructions for implementing the controls method of the present disclosure, etc. The data storage area stores data involved in the control method of the present disclosure, etc. Optionally, the at least one memory 1120 may be at least one storage device located away from the at least one processor 910. As shown in FIG. 10, the at least one memory 1120 may serve as a computer storage medium and may include the operating system, a network communication module, a user interface module, and program instructions.

It is understood that the electronic device 1100 may include more or fewer structural elements than those shown in the above block diagram, such as a display device, a power module, physical buttons, a Wi-Fi (Wireless Fidelity) module, a speaker, a Bluetooth module, sensors, etc., and may not be limited thereto.

The present disclosure provides a computer-readable storage medium storing a computer program. The computer program, when executed by a processor, implements the methods described in the above embodiments.

The present disclosure provides a computer program product that includes a non-transitory computer-readable storage medium storing a computer program. The computer program, when executed by a processor, implements the methods described in the above embodiments.

Those skilled in the art understand that all or part of the processes in the methods of the above embodiments are implemented by instructing relevant hardware through the computer program. The computer program is stored in the non-volatile computer-readable storage medium. When the computer program is executed, the processes of the embodiments of the methods described above are included. The computer-readable storage medium is a magnetic disk, an optical disk, a read-only memory (ROM), etc.

Any reference to memory, storage, database, or other media used herein includes non-volatile and/or volatile memory. Suitable non-volatile memory includes ROM, programmable ROM (PROM), erasable PROM (EPROM), electrically erasable PROM (EEPROM), or flash memory. Volatile memory includes random access memory (RAM), which is used as an external high-speed cache memory. By way of illustration and not limitation, the RAM is in various forms, such as static RAM (SRAM), dynamic random access memory (DRAM), synchronous DRAM (SDRAM), double data rate SDRAM (DDR SDRAM), enhanced synchronous DRAM (ESDRAM), synchlink DRAM (SLDRAM), Rambus DRAM (RDRAM), and direct Rambus DRAM (DRDRAM).

It is understood that "one embodiment" or "an embodiment" mentioned throughout the specification means that a specific feature, structure, or characteristic related to the embodiment is included in at least one embodiment of the present disclosure. Therefore, "in one embodiment" or "in an embodiment" appearing throughout the specification does not necessarily refer to the same embodiment. In addition, these specific features, structures, or characteristics are combined in one or more embodiments in any suitable manner. Those skilled in the art also understand that the embodiments described in the specification are optional embodiments, and the involved actions and modules are not necessarily required by the present disclosure.

In various embodiments of the present disclosure, it is understood that the sequence numbers of the above processes do not imply a necessary execution order. The execution order of the processes is determined by functions and internal logic thereof, and does not constitute any limitation on the implementation processes of the embodiments of the present disclosure.

Units described as separate components are physically separate or are not physically separate. Components displayed as units are physical units or are not physical units; that is, the units are located in one place or are distributed to multiple network units. Part or all of the units are selected according to actual requirements to achieve the objectives of the solutions of the embodiments.

In addition, functional units in the embodiments of the present disclosure are integrated into one processing unit, or each unit exists physically and independently, or two or more units are integrated into one unit. The integrated units are implemented in a form of hardware or in a form of software functional units.

The technical features of the above embodiments are combined in any manner. For the sake of concise description, all possible combinations of the technical features in the above embodiments are not described. However, as long as there is no contradiction in the combination of these technical features, the combinations are considered to be within the scope recorded in the specification.

The method, the apparatus, the electronic device, and the storage medium for determining a brushing strategy disclosed in the embodiments of the present disclosure are described in detail above. Specific examples are used herein to elaborate the principles and implementation manners of the present disclosure. The description of the above embodiments is used for helping to understand the method and core ideas of the present disclosure. Meanwhile, for those of ordinary skill in the art, there are changes in the specific implementation manners and application scope according to the ideas of the present disclosure. In conclusion, the content of the specification is not understood as a limitation on the present disclosure.

## Claims

1. A method for determining a brushing strategy, comprising steps:
acquiring a historical brushing record, wherein the historical brushing record at least comprises first historical brushing data corresponding to a first historical brushing cycle and second historical brushing data corresponding to a second historical brushing cycle;
comparing the first historical brushing data with the second historical brushing data to obtain at least one first comparison result;
when the at least one first comparison result is within at least one first preset range, determining that a required brushing strategy of a toothbrush is a first brushing strategy; and
when the at least one first comparison result is not within the first preset range, determining that the required brushing strategy of the toothbrush is a second brushing strategy.

2. The method according to claim 1, wherein a cleaning capacity corresponding to the second brushing strategy is greater than a cleaning capacity corresponding to the first brushing strategy; and/or
brushing comfort of the first brushing strategy is greater than brushing comfort of the second brushing strategy.

3. The method according to claim 1, wherein the first historical brushing cycle is a previous brushing cycle of a current brushing cycle, and the second historical brushing cycle is a previous brushing cycle of the first historical brushing cycle.

4. The method according to claim 1, wherein the second brushing strategy comprises sub-strategies, and the sub-strategies correspond to different toothbrush operating parameters;
wherein the step of when the at least one first comparison result is within the at least one first preset range, determining that the required brushing strategy of the toothbrush is the first brushing strategy comprises:
when the at least one first comparison result is not within the at least one first preset range, determining a target numerical range to which the at least one first comparison result belongs; and
determining a target sub-strategy corresponding to the target numerical range, and determining that the required brushing strategy of the toothbrush is the target sub-strategy.

5. The method according to claim 1, wherein the second brushing strategy comprises sub-strategies, and the sub-strategies correspond to different toothbrush operating parameters;
wherein the step of when the at least one first comparison result is within the at least one first preset range, determining that the required brushing strategy of the toothbrush is the first brushing strategy comprises:
when the at least one first comparison result is not within the at least one first preset range, and a current brushing strategy of the toothbrush is a first sub-strategy, determining that the required brushing strategy of the toothbrush is a second sub-strategy;
wherein the second sub-strategy is a next sub-strategy of the first sub-strategy.

6. The method according to claim 1, wherein the second brushing strategy comprises sub-strategies, and the sub-strategies correspond to different toothbrush operating parameters;
wherein the step of when the at least one first comparison result is not within the at least one first preset range, determining that the required brushing strategy of the toothbrush is the second brushing strategy comprises:
when the at least one first comparison result is not within the at least one first preset range, a current brushing strategy of the toothbrush is a first sub-strategy, and the first sub-strategy is not a last sub-strategy, determining that the required brushing strategy of the toothbrush is a second sub-strategy, wherein the second sub-strategy is a next sub-strategy of the first sub-strategy; and
when the at least one first comparison result is not within the at least one first preset range, the current brushing strategy of the toothbrush is the first sub-strategy, and the first sub-strategy is the last sub-strategy, continuing to determine that the required brushing strategy of the toothbrush is the first sub-strategy.

7. The method according to any one of claims 4-6, wherein the toothbrush operating parameters comprise at least one of: a motor frequency corresponding to an outer side of teeth, a motor duty cycle corresponding to the outer side of the teeth, a frequency change time interval corresponding to the outer side of the teeth, a motor frequency corresponding to an inner side of the teeth, a motor duty cycle corresponding to the inner side of the teeth, and a frequency change time interval corresponding to the inner side of the teeth.

8. The method according to claim 1, wherein the method further comprises a step:
in response to a toothbrush startup instruction, controlling the toothbrush to operate according to the required brushing strategy.

9. The method according to claim 8, wherein the step of in response to the toothbrush startup instruction, controlling the toothbrush to operate according to the required brushing strategy comprises:
when the required brushing strategy is the second brushing strategy, outputting strategy prompt information, wherein the strategy prompt information is configured to indicate selection of whether to operate according to the second brushing strategy; and
when a confirmation operation for the strategy prompt information is detected, controlling the toothbrush to operate according to the second brushing strategy, wherein the confirmation operation is used for indicating determination to operate the toothbrush according to the second brushing strategy.

10. The method according to claim 9, wherein when the confirmation operation for the strategy prompt information is detected, the method further comprises:
configuring the second brushing strategy as a default brushing strategy, so that the toothbrush operates according to the second brushing strategy by default each time the toothbrush is started within a current brushing cycle.

11. The method according to claim 9, wherein after outputting the strategy prompt information, the method further comprises:
when a cancellation operation for the strategy prompt information is detected, controlling the toothbrush to operate according to the first brushing strategy, wherein the cancellation operation is configured for indicating not to operate the toothbrush according to the second brushing strategy.

12. The method according to claim 11 wherein the first historical brushing cycle is a previous brushing cycle of the current brushing cycle; and when the cancellation operation for the strategy prompt information is detected, the method further comprises:
deleting the first historical brushing data corresponding to the first historical brushing cycle.

13. The method according to any one of claims 1 to 6 and 8 to 12, wherein after the step of comparing the first historical brushing data with the second historical brushing data to obtain the at least one first comparison result, the method further comprises a step:
generating a brushing report according to the at least one first comparison result, and outputting the brushing report.

14. The method according to claim 13, wherein the historical brushing data comprises one or more types of brushing data, wherein the step of comparing the first historical brushing data with the second historical brushing data to obtain the at least one first comparison result comprises:
comparing brushing data belonging to a same type in the first historical brushing data and the second historical brushing data to obtain the at least one first comparison result respectively corresponding to the one or more types of brushing data;
wherein the at least one first comparison result comprises first comparison results, and the at least one preset range comprises first preset ranges, and the step of when the at least one first comparison result is within the at least one first preset range, determining that the required brushing strategy of the toothbrush is the first brushing strategy comprises:
when the first comparison results corresponding to all types of brushing data are within the first preset ranges of all types of brushing data, determining that the required brushing strategy of the toothbrush is the first brushing strategy;
wherein the step of when the at least one first comparison result is not within the at least one first preset range, determining that the required brushing strategy of the toothbrush is the second brushing strategy comprises:
when there is a first comparison result corresponding to a first type of brushing data that is not within a first preset range corresponding to the first type of brushing data, determining that the required brushing strategy of the toothbrush is the second brushing strategy, wherein the first type of brushing data is any type of brushing data.

15. The method according to claim 14, wherein the historical brushing data comprises at least one type of brushing data of: brushing duration, a brushing cleaning rate, a brushing dental area coverage, a brushing pressure, a dental plaque cleaning rate, and a dental plaque residual amount.

16. The method according to claim 14, wherein the step of generating the brushing report according to the at least one first comparison result and outputting the brushing report comprises:
generating the brushing report according to the at least one first comparison result corresponding to the one or more types of brushing data, wherein the brushing report comprises one or more report interfaces one-to-one corresponding to the one or more types of brushing data; and
sequentially outputting the one or more report interfaces one-to-one corresponding to the one or more types of brushing data in a descending order of a priority of the one or more types of brushing data; or, selecting any one of the one or more report interfaces to output.

17. The method according to claim 13, wherein the first historical brushing cycle comprises first sub-cycles, the second historical brushing cycle comprises second sub-cycles, and the first sub-cycles are one-to-one corresponding to the second sub-cycles;
wherein the step of comparing the first historical brushing data with the second historical brushing data to obtain the at least one first comparison result comprises:
calculating average brushing data one-to-one corresponding to the first sub-cycles according to the first historical brushing data;
calculating average brushing data one-to-one corresponding to the second sub-cycles according to the second historical brushing data; and
respectively comparing the average brushing data one-to-one corresponding to the first sub-cycles with the average brushing data one-to-one corresponding to the second sub-cycles to obtain first comparison results respectively corresponding to the first sub-cycles.

18. The method according to claim 17, wherein the step of generating the brushing report according to the at least one first comparison result and outputting the brushing report comprises:
generating the brushing report according to the first comparison results respectively corresponding to the first sub-cycles;
wherein the brushing report comprises the first comparison results respectively corresponding to the first sub-cycles and/or a total result of the first comparison results corresponding to the first sub-cycles.

19. The method according to claim 17, wherein the step of generating the brushing report according to the at least one first comparison result and outputting the brushing report comprises:
under a condition that the required brushing strategy of the toothbrush is determined as the second brushing strategy, generating the brushing report according to the at least one first comparison result, and outputting the brushing report.

20. The method according to any one of claims 1 to 6, 8 to 12, and 14 to 19, wherein after the step of when the at least one first comparison result is not within the at least one first preset range, determining that the required brushing strategy of the toothbrush is the second brushing strategy, the method further comprises a step:
within a current brushing cycle, when it is detected that the toothbrush completes a brushing task, updating a brushing task progress corresponding to the current brushing cycle, and outputting an updated brushing task progress.

21. The method according to claim 20, wherein the method comprises steps:
under a condition that the brushing task progress corresponding to the current brushing cycle is completed, acquiring brushing data corresponding to the current brushing cycle;
comparing the brushing data with the first historical brushing data to obtain at least one second comparison result;
when the at least one second comparison result is within at least one second preset range, determining that the required brushing strategy of the toothbrush is the first brushing strategy; and
when the at least one second comparison result is not within the at least one second preset range, determining that the required brushing strategy of the toothbrush is the second brushing strategy.

22. The method according to any one of claims 1 to 6, 8 to 12 and 14 to 19, wherein: a motor frequency corresponding to the second brushing strategy is greater than a motor frequency corresponding to the first brushing strategy; and/or
a motor duty cycle corresponding to the second brushing strategy is greater than a motor duty cycle corresponding to the first brushing strategy; and/or
a motor operating duration corresponding to the second brushing strategy is not less than a motor operating duration corresponding to the first brushing strategy; and/or
a frequency change time interval corresponding to the second brushing strategy is less than a frequency change time interval corresponding to the first brushing strategy.

23. An apparatus for determining a brushing strategy, comprising:
a record acquisition module;
a comparison module; and
a strategy determination module;
wherein the record acquisition module is configured to acquire a historical brushing record, wherein the historical brushing record at least comprises first historical brushing data corresponding to a first historical brushing cycle and second historical brushing data corresponding to a second historical brushing cycle;
wherein the comparison module is configured to compare the first historical brushing data with the second historical brushing data to obtain at least one first comparison result;
wherein when the at least one first comparison result is within at least one first preset range, the strategy determination module is configured to determine that a required brushing strategy of a toothbrush is a first brushing strategy; and when the at least one first comparison result is not within the at least one first preset range, the strategy determination module is configured to determine that the required brushing strategy of the toothbrush is a second brushing strategy.

24. An electronic device, comprising:
a memory; and
a processor;
wherein a computer program is stored in the memory, and when the computer program is executed by the processor, the processor implements the method according to any one of claims 1 to 22.

25. A computer-readable storage medium, comprising: a computer program stored thereon;
wherein when the computer program is executed by a processor, the method according to any one of claims 1 to 22 is implemented.
